# EUROPEAN PATENT SPECIFICATION

(11) **EP 3 434 932 B1**
(45) Date of publication and mention of the grant of the patent: **13.01.2021**
(21) Application number: 17770177.8
(22) Date of filing: 17.03.2017
(51) Int. Cl.: F16G 1/28, B62D 5/04, F16H 7/02

(54) **HELICAL BELT AND BELT TRANSMISSION GEAR**
SPIRALFÖRMIGER RIEMEN UND RIEMENGETRIEBE
COURROIE HÉLICOÏDALE ET ENGRENAGE DE TRANSMISSION À COURROIE

(30) Priority: 25.03.2016 JP 2016061393; 17.02.2017 JP 2017027635
(43) Date of publication of application: 30.01.2019
(73) Proprietor: Mitsuboshi Belting Ltd., Kobe-shi, Hyogo 653-0024 (JP)
(72) Inventor: YOSHIDA, Masakuni, Kobe-shi Hyogo 653-0024 (JP); ISOE, Shunsuke, Kobe-shi Hyogo 653-0024 (JP); IDEGUCHI, Isao, Kobe-shi Hyogo 653-0024 (JP)
(74) Representative: Hoffmann Eitle
(86) International application number: PCT/JP2017/011043
(87) International publication number: WO 2017/164135

(56) References cited:
- EP-A1- 2 803 879
- EP-A1- 2 803 879
- WO-A1-2014/091672
- DE-T5-112013 005 915
- JP-A- 2012 225 456
- JP-A- 2012 225 456
- JP-B2- 5 315 355

## Description

### TECHNICAL FIELD

The present invention relates to a helical toothed belt, and particularly to a helical toothed belt which is applied to a belt power transmission device driven with high load or high-speed rotation, and the belt power transmission device.

### BACKGROUND ART

For example, in a belt power transmission device driven with high load or high-speed rotation, like in a deceleration device of an electric power steering apparatus, if a straight toothed belt having tooth portions extending parallel to a belt width direction is used, large noise and vibration are generated at the time of starting and ending of the meshing between the tooth portions thereof and tooth portions of a pulley. As a countermeasure to this problem, a helical toothed belt in which the tooth portions are disposed obliquely to the belt width direction has been used. In the helical toothed belt, the meshing between the tooth portions thereof and the tooth portions of the pulley progresses sequentially from one end to the other end of the tooth portions. Therefore, noise and vibration can be reduced as compared with a belt power transmission device using the straight toothed belt.

However, even in the case where the helical toothed belt is used, noise and vibration cannot be reduced necessarily and sufficiently. Therefore, JP-A2004-308702 and WO 2014/024377 propose techniques for further reducing noise and vibration in a belt power transmission device using a helical toothed belt and driven with high load or high-speed rotation, for example.

In JP-A2004-308702, a tooth trace angle θ is set to a value that satisfies -0.2≤1-W·tan θ/Pt≤0.75 with a tooth pitch being Pt and a belt width being W. In addition, the backlash (gap) between tooth portions of the helical toothed belt and tooth portions of a pulley is set to 1.6% to 3% of the tooth pitch Pt.

In PTL WO 2014/024377, the tooth trace angle θ is set to 7 degrees or more and 10 degrees or less. In addition, a ratio (100 Btb/hb) of a thickness tb to a tooth height hb is set to 120% or more and 240% or less with the thickness of a back portion being tb and the tooth height of a tooth portion being hb.

Other examples of the prior art can be seen in documents EP 2 803 879 A1 and JP 2012 225456 A.

### SUMMARY OF INVENTION

### TECHNICAL PROBLEM

Recently, the quietness of vehicles is advancing. Therefore, for example, a belt power transmission device such as a deceleration device of an electric power steering apparatus is required to further reduce noise.

However, with the techniques of JP-A2004-308702 and WO 2014/024377, noise cannot be reduced to a satisfactory level.

Therefore, an object of the present invention is to provide a helical toothed belt that can further reduce noise and vibration in the case of being used in a belt power transmission device driven with high load or high-speed rotation.

### SOLUTION TO PROBLEM

In JP-A2004-308702 and WO 2014/024377 described above, the reduction of noise and vibration was attempted by seeking optimal conditions of structural parameters of a helical toothed belt, such as a tooth trace angle, a tooth shape and a thickness. However, it seemed difficult to further reduce the noise and vibration only by such structural measures. Therefore, the inventors of the present application considered devising a constituent material of a helical toothed belt which has not been sufficiently studied so far.

The helical toothed belt according to the present invention is a helical toothed belt including: a back portion in which a tension member is buried and; a plurality of tooth portions which are arranged at a predetermined interval along a belt longitudinal direction on one surface of the back portion and each have inclination with respect to a belt width direction, in which a surface of the tooth portion and a portion of the one surface of the back portion are formed of a tooth fabric, the other surface of the back portion is formed of a back fabric, the plurality of tooth portions have a tooth pitch of 2 mm or more and 5 mm or less, and in a case where the tooth pitch of the plurality of tooth portions is 2 mm or more and less than 3 mm, the back portion has a thickness of 0.6 mm or more and 1.3 mm or less, in a case where the tooth pitch of the plurality of tooth portions is 3 mm or more and less than 4 mm, the thickness of the back portion is 0.6 mm or more and 1.5 mm or less, in a case where the tooth pitch of the plurality of tooth portions is 4 mm or more and 5 mm or less, the thickness of the back portion is 1.2 mm or more and 2.0 mm or less, and the tension member is a twisted cord containing a high-strength glass fiber or a carbon fiber and having a diameter of 0.2 mm or more and 0.6 mm or less. The tooth fabric is formed of a woven fabric comprising warp yarns and weft yarns; the woven fabric having an adhesive layer formed by an adhesive treatment on its surface; wherein the back fabric is formed of a knitted fabric knitted with knitting yarns; the knitted fabric having no adhesive layer by an adhesive treatment on its surface; wherein a rubber composition constituting a belt main body is impregnated to the knitted fabric

According to this configuration, a portion of the surface on the tooth portion side of the back portion is formed of the tooth fabric, and the other surface of the back portion is formed of the back fabric. Therefore, the back portion is reinforced by the tooth fabric and the back fabric to increase rigidity. Furthermore, the tension member buried in the back portion is formed of a twisted cord containing a high-strength glass fiber which is a high-strength (high elastic modulus) fiber material or carbon fiber. The diameter of the twisted cord is 0.2 mm or more and 0.6 mm or less. Therefore, the rigidity of the back portion can be further enhanced by the tension member while securing a bendability of the back portion.

The rigidity of the back portion is enhanced as described above. Therefore, even in the case where the helical toothed belt is used in a belt power transmission device driven with high load or high-speed rotation, vibration (string vibration) about the tension member of the helical toothed belt generated when the tooth portions mesh with the tooth portions of the pulley can be suppressed. Therefore, noise generated by this vibration can be reduced.

In addition, in the case where the tooth pitch is 2 mm or more and less than 3 mm, the thickness of the back portion is 0.6 mm or more and 1.3 mm or less. In the case where the tooth pitch is 3 mm or more and less than 4 mm, the thickness of the back portion is 0.6 mm or more and 1.5 mm or less. In the case where the tooth pitch is 4 mm or more and 5 mm or less, the thickness of the back portion is 1.2 mm or more and 2.0 mm or less. These thicknesses are about the same as the thickness of the back portion of a conventional helical toothed belt used in a deceleration device of an electric power steering apparatus for a vehicle, for example. The helical toothed belt of the present invention can increase the rigidity of the back portion without increasing the thickness of the back portion. Therefore, vibration and noise can be further suppressed while sufficiently securing bending fatigue resistance.

In the helical toothed belt of the present invention, it is preferable that, in the case where the tooth pitch of the plurality of tooth portions is 2 mm or more and less than 3 mm, the tooth portion has a tooth height of 0.7 mm or more and 2.0 mm or less, in a case where the tooth pitch of the plurality of tooth portions is 3 mm or more and less than 4 mm, the tooth height of the tooth portion is 1.0 mm or more and 2.3 mm or less, and in a case where the tooth pitch of the plurality of tooth portions is 4 mm or more and 5 mm or less, the tooth height of the tooth portion is 1.5 mm or more and 2.3 mm or less.

In the helical toothed belt of the present invention, it is preferable that the back portion contains a rubber component, and the rubber component contains an ethylene-propylene-diene terpolymer or a hydrogenated nitrile rubber.

In the helical toothed belt of the present invention, it is preferable that the warp yarns or the weft yarns are disposed so as to extend in the belt longitudinal direction, and the warp yarns or weft yarns disposed so as to extend in the belt longitudinal direction contains an elastic yarn having stretchability.

In the helical toothed belt of the present invention, it is preferable that fibers constituting the tooth fabric contain at least one kind of fibers selected from the group consisting of nylon, aramid, polyester, polybenzoxazole, and cotton.

In the helical toothed belt of the present invention, it is preferable that fibers constituting the back fabric contain at least one kind of fibers selected from the group consisting of nylon, aramid and polyester.

A belt power transmission device of the present invention contains a driving pulley that is rotatably driven by a driving source, a driven pulley, and the helical toothed belt of the present invention which is wound around the driving pulley and the driven pulley.

In the belt power transmission device of the present invention, the rotational speed of the driving pulley may be 1,000 rpm or more and 4,000 rpm or less. According to this configuration, noise and vibration can be sufficiently reduced in the belt power transmission device driven with high-speed rotation.

In the belt power transmission device of the present invention, the load of the driven pulley may be 0.5 kW or more and 3 kW or less. According to this configuration, noise and vibration can be sufficiently reduced in the belt power transmission device driven with high load.

In the belt power transmission device of the present invention, it is preferable that the driven pulley has an outer diameter larger than an outer diameter of the driving pulley, and the belt power transmission device is a deceleration device of an electric power steering apparatus for a vehicle. According to this configuration, the noise and vibration can be sufficiently reduced in the deceleration device of an electric power steering apparatus for a vehicle.

### ADVANTAGEOUS EFFECTS OF INVENTION

In the present invention, the back portion is reinforced by the back fabric and the tooth fabric and also reinforced by the tension member formed of the twisted cord of the high-strength glass fiber or carbon fiber. Therefore, since the rigidity of the back portion is increased without increasing the thickness, noise and vibration can be further reduced in the case of being used in the belt power transmission device driven with high load or high-speed rotation.

### BRIEF DESCRIPTION OF DRAWINGS

[FIG. 1] FIG. 1 is a schematic diagram illustrating a schematic configuration of an electric power steering apparatus to which a helical toothed belt of the present embodiment is applied.
[FIG. 2] FIG. 2 is a side view illustrating a deceleration device of an electric power steering apparatus.
[FIG. 3] FIG. 3 is a partial perspective view illustrating a helical toothed belt.
[FIG. 4] FIG. 4 is a view illustrating a helical toothed belt viewed from the inner peripheral side.

### DESCRIPTION OF EMBODIMENTS

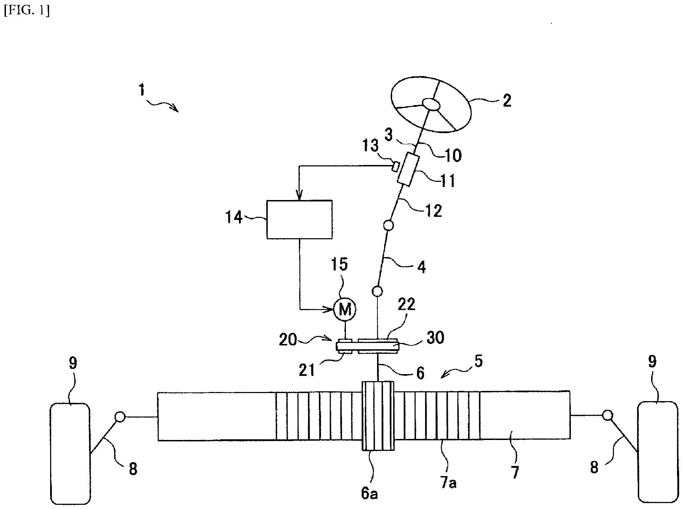

An embodiment of the present invention will be described below. A helical toothed belt 30 of the present embodiment is used, for example, in a deceleration device 20 of an electric power steering apparatus 1 for a vehicle, illustrated in FIG. 1.

### [Configuration of Electric Power Steering Apparatus]

An electric power steering (EPS) apparatus 1 contains a steering shaft 3 that is connected to a steering wheel 2, an intermediate shaft 4 that is connected to the steering shaft 3, and a steering mechanism 5 that is connected to the intermediate shaft 4 and steers wheels 9 by interlocking with the rotation of the steering wheel 2.

The steering mechanism 5 contains a pinion shaft 6 that is connected to the intermediate shaft 4, and a rack shaft 7 that is meshed with the pinion shaft 6. The rack shaft 7 extends along a left-right direction of the vehicle. A rack 7a that meshes with a pinion 6a provided on the pinion shaft 6 is formed in a middle portion of the rack shaft 7 in the axial direction. Wheels 9 are connected to both end portions of the rack shaft 7 via tie rods 8 and knuckle arms (not illustrated). The rotation of the steering wheel 2 is transmitted to the pinion shaft 6 via the steering shaft 3 and the intermediate shaft 4. The rotation of the pinion shaft 6 is converted into the axial movement of the rack shaft 7. As a result, the wheels 9 are steered.

The electric power steering apparatus 1 is configured to obtain a steering assisting force according to the steering torque applied to the steering wheel 2. As a means for this, the electric power steering apparatus 1 contains a torque sensor 13 that detects the steering torque, a control device 14, an electric motor 15 (driving source) for steering assist, and a deceleration device 20 as a transmission device that transmits a driving force of the electric motor 15 and to the steering mechanism 5.

In order to detect the steering torque by the torque sensor 13, the steering shaft 3 has an input shaft 10, a torsion bar 11 and an output shaft 12. When the steering wheel 2 is operated and a steering torque is input to the input shaft 10, the torsion bar 11 is twisted and deformed, and the input shaft 10 and the output shaft 12 rotate relatively to each other. The torque sensor 13 detects the steering torque input to the steering wheel 2 based on the relative rotational displacement amount between the input shaft 10 and the output shaft 12. The detection result of the torque sensor 13 is input to the control device 14. The control device 14 controls the electric motor 15 based on the steering torque or the like detected by the torque sensor 13.

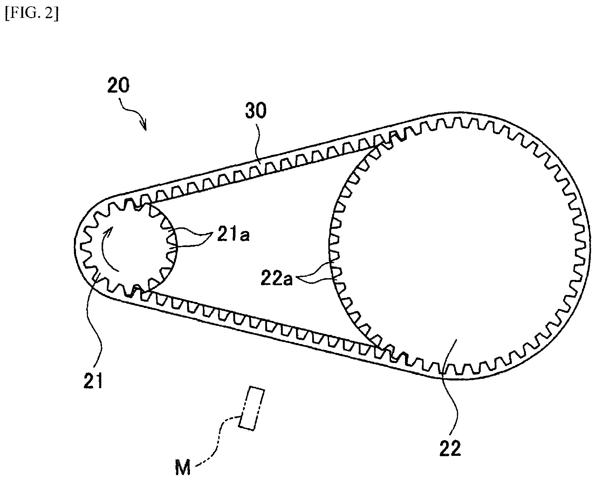

The deceleration device 20 contains a driving pulley 21, a driven pulley 22, and a helical toothed belt 30 wound around the pulleys 21 and 22. The driven pulley 22 has an outer diameter larger than that of the driving pulley 21. The driving pulley 21 is fixed to the rotation shaft of the electric motor 15. The driven pulley 22 is fixed to the pinion shaft 6. As illustrated in FIG. 2, a plurality of helical teeth 21a are formed on the outer peripheral surface of the driving pulley 21. A plurality of helical teeth 22a are formed on the outer peripheral surface of the driven pulley 22. The rotation speed of the driving pulley 21 is, for example, 1,000 rpm or more and 4,000 rpm or less. The load of the driven pulley 22 is, for example, 0.5 kW or more and 3 kW or less.

When the steering wheel 2 is operated, the steering torque is detected by the torque sensor 13, and the control device 14 drives the electric motor 15. When the electric motor 15 rotates the driving pulley 21, the helical toothed belt 30 runs, and the driven pulley 22 and the pinion shaft 6 rotate. The rotational force of the electric motor 15 is reduced by the deceleration device 20 and is transmitted to the pinion shaft 6. In addition, as described above, the rotation of the steering wheel 2 is transmitted to the pinion shaft 6 via the steering shaft 3 and the intermediate shaft 4. Then, the rotation of the pinion shaft 6 is converted into the movement of the rack shaft 7 in the axial direction, whereby the wheels 9 are steered. Accordingly, the rotation of the pinion shaft 6 is assisted by the electric motor 15, so that the steering of the driver is assisted.

The configuration of the electric power steering apparatus to which the helical toothed belt of the present invention can be applied is not limited to the configuration illustrated in FIG. 1. For example, the driven pulley 22 of the deceleration device 20 may be fixed to the intermediate shaft 4 or the steering shaft 3. In addition, for example, the driven pulley 22 of the deceleration device 20 may be connected to the rack shaft 7 via a conversion mechanism. The conversion mechanism is, for example, a ball screw mechanism or a bearing screw mechanism, and converts the rotational force of the driven pulley 22 into a force in the axial direction of the rack shaft 7, and transmits the force to the rack shaft 7.

### [Configuration of Helical Toothed Belt]

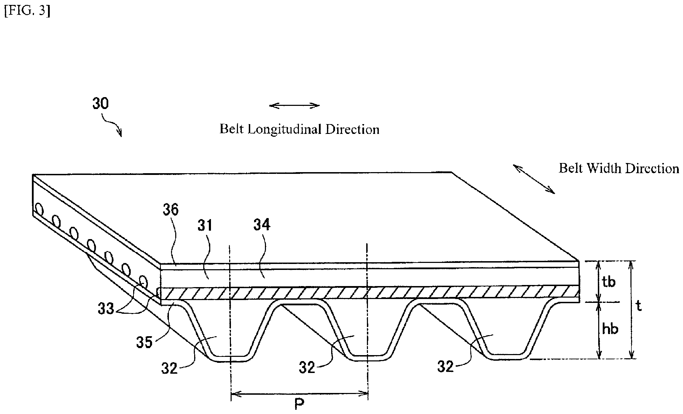

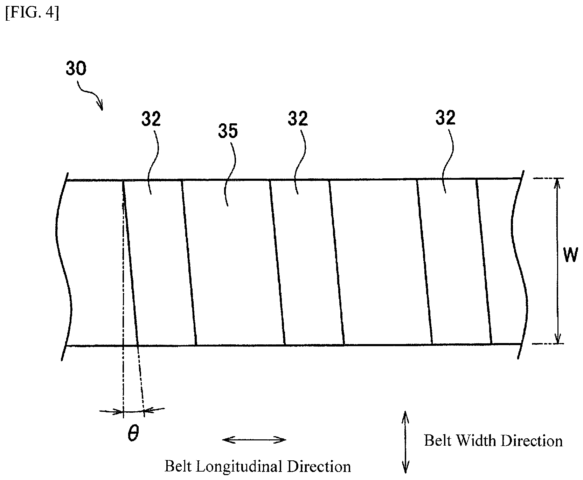

As illustrated in FIG. 3, the helical toothed belt 30 contains a back portion 31 in which a tension member 33 is buried, and a plurality of tooth portions 32 provided on the inner peripheral surface of the back portion 31 at predetermined intervals along a belt longitudinal direction. As illustrated in FIG. 4, the tooth portion 32 extends obliquely with respect to the belt width direction. The tooth portion 32 is provided on the inner peripheral surface of the helical toothed belt 30. The helical toothed belt 30 contains a belt main body 34 that is formed of a rubber composition, the tension member 33 that is buried in the belt main body 34, a tooth fabric 35 that covers an inner peripheral surface of the belt main body 34, and a back fabric 36 that covers the outer peripheral surface of the belt main body 34. The tooth portion 32 is formed of a portion of the belt main body 34 and a portion of the tooth fabric 35, and the back portion 31 is formed of a portion of the belt main body 34, the back fabric 36, and a portion of the tooth fabric 35. In other words, the surface of the tooth portion 32 and a portion of the inner peripheral surface of the back portion 31 are formed of the tooth fabric 35, and the outer peripheral surface of the back portion 31 is formed of the back fabric 36.

A perimeter of the helical toothed belt 30 is, for example, from 150 to 400 mm. In this specification, the numerical range represented by "from X to Y" means "X or more and Y or less". The width W (see FIG. 4) of the helical toothed belt 30 is, for example, from 4 to 30 mm. The tooth pitch P (see FIG. 3) of the tooth portion 32 is from 2 to 5 mm. In the case where the tooth pitch P is 2 mm or more and less than 3 mm, the thickness tb (see FIG. 3) of the back portion 31 is from 0.6 to 1.3 mm, and preferably 0.6 mm or more and 0.9 mm or less. In the case where the tooth pitch P is 3 mm or more and less than 4 mm, the thickness tb of the back portion 31 is from 0.6 to 1.5 mm, and preferably 0.8 mm or more and 1.2 mm or less. In the case where the tooth pitch P is 4 mm or more and 5 mm or less, the thickness tb of the back portion 31 is from 1.2 to 2.0 mm, and preferably 1.3 mm or more and 1.8 mm or less. In the case where the tooth pitch P is 2 mm or more and less than 3 mm, the tooth height hb (see FIG. 3) of the tooth portion 32 is, for example, from 0.7 to 2.0 mm, and preferably 0.8 mm or more and 1.0 mm or less. In the case where the tooth pitch P is 3 mm or more and less than 4 mm, the tooth height hb of the tooth portion 32 is, for example, from 1.0 to 2.3 mm, and preferably 1.1 mm or more and 2.0 mm or less. In the case where the tooth pitch P is 4 mm or more and 5 mm or less, the tooth height hb of the tooth portion 32 is, for example, from 1.5 to 2.3 mm, and preferably 1.7 mm or more and 2.0 mm or less. The total thickness (maximum thickness) t (see FIG. 3) of the helical toothed belt 30 is the sum of the thickness tb of the back portion 31 and the tooth height hb. An inclination angle θ (see FIG. 4) of the tooth portion 32 with respect to the belt width direction is, for example, from 2 to 7°, and preferably from 2 to 6°.

### [Belt Main Body]

As rubber components of the rubber composition constituting the belt main body 34, use can be made of chloroprene rubber (CR), nitrile rubber, hydrogenated nitrile rubber (HNBR), ethylene-propylene copolymer (EPM), ethylene-propylene-diene terpolymer (EPDM), styrene-butadiene rubber, butyl rubber, chlorosulfonated polyethylene rubber, and the like. A particularly preferred rubber component is an ethylene-propylene-diene terpolymer (EPDM), and chloroprene rubber and hydrogenated nitrile rubber (HNBR) are also preferably used. The portion constituting the tooth portion 32 and the portion constituting the back portion 31, of the belt main body 34, may be formed of the same rubber composition or may be formed of different rubber compositions.

The rubber composition constituting the belt main body 34 may contain various conventional additives (or compounding agents), if necessary. Examples of the additives include vulcanizing agents or crosslinking agents (e.g., oximes (quinone dioxime, etc.), guanidines (diphenylguanidine, etc.)), metal oxides (magnesium oxide, zinc oxide, etc.), vulcanization aids, vulcanization accelerators, vulcanization retarders, reinforcing agents (carbon black, silicon oxide such as hydrated silica, etc.), metal oxides (e.g., zinc oxide, magnesium oxide, calcium oxide, barium oxide, iron oxide, copper oxide, titanium oxide, aluminum oxide, etc.), fillers (clay, calcium carbonate, talc, mica, etc.), plasticizers, softening agents (oils such as paraffin oil and naphthenic oil, etc.), processing agents or processing aids (stearic acid, metal salts of stearic acid, wax, paraffin, etc.), anti-aging agents (aromatic amine type or benzimidazole type anti-aging agents, etc.), stabilizers (anti-oxidizing agents, ultraviolet absorbers, heat stabilizers, etc.), lubricants, flame retardants, antistatic agents, or the like. These additives can be used singly or in combination, and can be selected according to the kind, application, performance, or the like of the rubber component.

### [Tension member]

The tension member 33 is buried in the belt main body 34 along the belt longitudinal direction. The tension member 33 is spirally buried at intervals in the belt width direction. The tension member 33 is formed of a twisted cord formed by twisting a plurality of strands. A single strand may be formed by bundling and aligning filaments (long fibers). The diameter of the tension member 33 is 0.2 to 0.6 mm. There are no particular restrictions on the thickness of the filament forming the twisted cord, the number of filaments converged, the number of strands, and the twisting configuration such as twisting manner. The material of the filament is high-strength glass fiber or carbon fiber. Both the high-strength glass fiber and the carbon fiber are high in strength and low in elongation, and are suitable as the material of the tension member 33. From the viewpoint of low cost, high-strength glass fiber is more preferable.

As the high-strength glass fiber, for example, one having a tensile strength of 300 kg/cm² or more and particularly, the glass fiber described in the following Table 1 which contains more Si component than non-alkali glass fiber (E glass fiber) can be suitably used. In Table 1 below, the composition of the E glass fiber is also described for comparison. Examples of such high-strength glass fibers include K glass fiber, U glass fiber (both manufactured by Nippon Glass Fiber Co., Ltd.), T glass fiber (manufactured by Nitto Boseki Co., Ltd.), R glass fiber (manufactured by Vetrotex), S glass fiber, S-2 glass fiber, ZENTRON glass fiber (all manufactured by Owens Corning Fiberglass), and the like.

**[Table 1]**

| Ingredient item | High-strength glass fiber | E glass fiber |
|---|---|---|
| SiO | 58 to 70 | 52 to 56 |
| Al₂O₃ | 17 to 27 | 12 to 16 |
| MgO | 7 to 17 | 0 to 6 |
| CaO | 0 to 10 | 12 to 25 |
| Na₂O | 0 to 2 | 0 to 0.8 |
| K₂O | 0 to 2 | 8 to 13 |
| B₂O₃ | 0 to 2 | |
| | Impurities such as Fe₂O₃ and TiO₂ are contained. | |

An adhesive treatment is applied to the twisted cord used as the tension member 31 so as to enhance the adhesion with the belt main body 34. As the adhesive treatment, for example, a method in which the twisted cord is immersed in a resorcinol-formalin-latex treatment liquid (RFL treatment liquid) and then dried by heating to form an adhesive layer evenly on the surface is adopted. The RFL treatment solution is obtained by mixing an initial condensate of resorcin and formalin with a latex, and examples of the latex used here include chloroprene, styrene-butadiene-vinylpyridine terpolymer (VP latex), hydrogenated nitrile, NBR, and the like. As the adhesive treatment, there is also a method of pretreating with an epoxy or isocyanate compound and then treating with the RFL treatment liquid, or the like.

### [Tooth fabric]

The tooth fabric 35 is preferably formed of a woven fabric woven by vertically and horizontally interlacing warp yarns and weft yarns according to a predetermined rule. The weaving manner of the woven fabric may be any of twill weave, satin weave and the like. The form of a warp yarn and a weft yarn may be any of a multifilament yarn obtained by aligning or twisting filaments (long fibers), a monofilament yarn as one long fiber, and a spun yarn obtained by twisting short fibers together. In the case where the warp yarn or weft yarn is a multifilament yarn or a spun yarn, it may be a blended twisted yarn or a blended spun yarn using a plurality of types of fibers. The weft yarn preferably contains an elastic yarn having stretchability. As the elastic yarn, for example, use can be made of a material itself having stretchability, such as spandex made of polyurethane, or a processed yarn obtained by stretching (e.g., woolly processing, crimping processing, etc.) of a fiber(s). Normally, elastic yarn is not used for a warp yarn. Therefore, weaving is easy. As the tooth fabric 35, it is preferable that the warp yarns of the woven fabric are disposed to extend in the belt width direction and the weft yarns are disposed to extend in the belt longitudinal direction. Accordingly, stretchability of the tooth fabric 35 in the belt longitudinal direction can be secured. The tooth fabric 35 may be disposed so that the weft yarns of the woven fabric are disposed to extend in the belt width direction and the warp yarns are disposed to extend in the belt longitudinal direction. In this case, the elastic yarn having stretchability may be used as the warp yarn. As the material of the fibers constituting the tooth fabric 35, any one or combination of nylon, aramid, polyester, polybenzoxazole, cotton, and the like can be adopted.

The woven fabric used as the tooth fabric 35 may be subjected to an adhesive treatment so as to enhance the adhesion with the belt main body 34. As the adhesive treatment, a method of immersing the woven fabric in a resorcinol-formalin-latex (RFL liquid), and then heating and drying to uniformly form an adhesive layer on the surface thereof is generally used. However, it is not limited thereto. A method of pretreating with an epoxy or isocyanate compound and then treating with the RFL liquid, as well as a method in which a rubber composition is dissolved in an organic solvent such as methyl ethyl ketone, toluene and xylene to form a rubber paste and the woven fabric is dipped in this rubber paste so as to impregnate and adhere the rubber composition, can also be adopted. These methods can be performed singly or in combination, and the order of processing and the number of times of processing are not particularly limited.

### [Back Fabric]

The back fabric 36 is preferably formed of a knitted fabric knitted with knitting yarns or a woven fabric woven by vertically and horizontally interlacing warp yarns and weft yarns according to a predetermined rule.

A knitted fabric is a fabric having a structure knitted in such a manner that one or two or more knitting yarns form a mesh (loop), and the next yarn is hooked to the loop to form a new loop continuously. In other words, the knitted fabric is formed by making loops without linearly interlacing the yarns. In the case of using a knitted fabric for the back fabric 36, the knitted fabric (or knitting manner of knitted fabric) may be either a weft knitting (or knitted fabric knitted by weft knitting) or a warp knitting (or knitted fabric knitted by warp knitting). As the shape of the knitted fabric, it is not limited and may be a planar shape, a cylindrical shape (circular knitting), and the like. In addition, in the knitted fabric, either a front surface or a back surface may be used as the surface to be bonded to the belt main body. Examples of the weft knitting (or knitting structure of weft knitting) include a flat knitting (plain knitting), rubber knitting, pique knitting, Smooth knitting, Jacquard knitting, and the like. Examples of the warp knitting (knitting structure of warp knitting) include single denbigh, single cord, tricot, half tricot and the like.

In the case of using a woven fabric for the back fabric 36, the weaving manner of the woven fabric may be any of plain weave, twill weave, satin weave, and the like. From the viewpoint of securing the bendability of the helical toothed belt 30, the weaving structure or knitting structure is preferably a form capable of easily stretching in the belt longitudinal direction so as to be likely to bend in the belt longitudinal direction. It is therefore preferable that a woven fabric containing an elastic yarn having stretchability as the weft yarn is used, and the warp yarns of the woven fabric are disposed to extend in the belt width direction and the weft yarns are disposed to extend in the belt longitudinal direction. The form of the knitting yarn of the knitted fabric or the warp yarn and weft yarn of the woven fabric may be any of a multifilament yarn obtained by aligning or twisting filaments (long fibers), a monofilament yarn as one long fiber, and a spun yarn obtained by twisting short fibers together. In the case where the warp yarn or weft yarn is a multifilament yarn or a spun yarn, it may be a blended twisted yarn or a blended spun yarn using a plurality of types of fibers. As the material of the fibers constituting the back fabric 36, any one or combination of nylon, aramid, polyester and the like can be adopted.

The woven fabric or knitted fabric used as the back fabric 36 may be subjected to an adhesive treatment so as to enhance the adhesion with the belt main body 34. As the adhesive treatment, like in the case of the tooth fabric 35, it is preferable that the fabric is immersed in the resorcinol-formalin-latex (RFL liquid) and then is heated and dried to form an adhesive layer evenly on the surface. However, it is not limited thereto. A method of pretreating with an epoxy or isocyanate compound and then treating with the RFL liquid, as well as a method in which a rubber composition is dissolved in an organic solvent such as methyl ethyl ketone, toluene and xylene to form a rubber paste and the fabric is dipped in this rubber paste so as to impregnate and adhere the rubber composition, can also be adopted. These methods can be performed singly or in combination, and the order of processing and the number of times of processing are not particularly limited. In the case where the back fabric 36 is a knitted fabric, in a manufacturing method of the helical toothed belt 30 described below, the unvulcanized rubber sheet wrapped on the knitted fabric in the heating and pressurizing step is impregnated into the knitted fabric. Therefore, an adhesive treatment may not be applied.

### [Manufacturing Method of Helical Toothed Belt]

The helical toothed belt 30 is produced, for example, by the following procedure.

First, a woven fabric to form the tooth fabric 35, on which an adhesive treatment has been performed, is wound around a cylindrical mold (not illustrated) having a plurality of groove portions corresponding to the plurality of tooth portions 32 of the helical toothed belt 30. Subsequently, a twisted cord to constitute the tension member 33 is spirally spun around the outer peripheral surface of the wound woven fabric. Then, an unvulcanized rubber sheet to form the belt main body 34 is wound around the outer peripheral side, and finally a knitted fabric or woven fabric to form the back fabric 36 is wound, to thereby form an unvulcanized belt molded body. In the case where a woven fabric is used as the back fabric 36, the woven fabric has been subjected to an adhesive treatment before winding. On the other hand, in the case where a knitted fabric is used as the back fabric 36, adhesive treatment may not be performed. Then, in a state in which the belt molded body is disposed on the outer periphery of the cylindrical mold, a rubber-made jacket which is a steam shielding material is further covered on the outside thereof. Next, the belt molded body and the cylindrical mold covered with the jacket are accommodated inside a vulcanization can. Then, the belt molded body is heated and pressurized inside the vulcanization can so as to vulcanize the rubber sheet. Thus, the rubber composition of the rubber sheet is press-fitted into the groove portions of the mold, and the tooth portions 32 are formed. Then, the sleeve-like molded body is released from the mold and cut to a predetermined width, whereby a plurality of helical toothed belts 30 are obtained.

The helical toothed belt 30 of the present embodiment has the following features.

A portion of the surface of the back portion 31 on the tooth portion 32 side is formed of the tooth fabric 35, and the other surface of the back portion 31 is formed of the back fabric 36. Therefore, the back portion 31 is reinforced by the tooth fabric 35 and the back fabric 36 to increase the rigidity. Furthermore, the tension member 33 buried in the back portion 31 is formed of a twisted cord containing a high-strength glass fiber or a carbon fiber, which are a high-strength (high elastic modulus) fiber material. The diameter of the twisted cord is 0.2 mm or more and 0.6 mm or less. Therefore, the rigidity of the back portion 31 can be further increased by the tension member 33 while securing the bendability of the back portion 31.

The rigidity of the back portion 31 is increased in this way. Therefore, even in the case where the helical toothed belt 30 is used in a belt power transmission device driven with a high load or a high-speed rotation, such as the deceleration device 20, vibration (string vibration) of the helical toothed belt 30 (particularly tension member 33 portion of back portion 31) in thickness direction, which is generated when the tooth portion 32 meshes with the helical teeth 21a and 22a of the pulleys 21, 22, can be suppressed. Therefore, noise generated by this vibration can be reduced.

In addition, in the case where the tooth pitch P is 2 mm or more and less than 3 mm, the thickness tb of the back portion 31 is 0.6 mm or more and 1.3 mm or less. In the case where the tooth pitch P is 3 mm or more and less than 4 mm, the thickness tb of the back portion 31 is 0.6 mm or more and 1.5 mm or less. In the case where the tooth pitch P is 4 mm or more and 5 mm or less, the thickness tb of the back portion 31 is 1.2 mm or more and 2.0 mm or less. These thicknesses are about the same as the thickness of the back portion of a conventional helical toothed belt used in a deceleration device of an electric power steering apparatus for vehicles, for example. The helical toothed belt 30 of the present embodiment can increase the rigidity of the back portion 31 without increasing the thickness of the back portion 31. Therefore, vibration and noise can be suppressed while sufficiently securing bending fatigue resistance.

Although the preferred embodiments of the present invention are described above, the present invention is not limited to the embodiments described above, and various modifications can be made within the range described in the claims.

### EXAMPLE

Next, specific examples of the present invention will be described.

Twisted cords of A1 to A4 having the constitution shown in Table 2 below were prepared as the tension member of the helical toothed belt of Examples 1 to 12 and Comparative Examples 1 to 6.

The twisted cord of A1 was prepared by the following procedure. Filaments of the glass fiber of the designation KCG 150 described in JIS R 3413 (2012) were bundled and aligned to make three strands. These three strands were immersed in RFL liquid shown in Table 3 below and heated and dried at 200 to 280°C to uniformly form an adhesive layer on the surface. After this adhesive treatment, these three strands were twisted with the number of primary twist of 12 times/10 cm, thereby prepare a twisted cord having a diameter of 0.35 mm. Without giving a final twist, the twisted cord was made a single twist. The twisted cords of A2 and A3 were prepared in the same manner as A1, except that the glass fibers were changed to UCG 150 and ECG 150, respectively.

In addition, the twisted cord of A4 was prepared by the following procedure. Filaments of carbon fibers were bundled and aligned to make one strand. The subsequent procedure was the same as the tension member of A1 to A3. The diameter of the twisted cord was 0.53 mm.

**[Table 2]**

| | A1 | A2 | A3 | A4 |
|---|---|---|---|---|
| Material | K glass fiber | U glass fiber | E glass fiber | Carbon fiber |
| Filament diameter (µm) | 9 | 9 | 9 | 7 |
| Strand configuration | KCG150-3/0 | UCG150-3/0 | ECG150-3/0 | 3K-1/0 |
| Number of primary twist (times/10 cm) | 12 | 12 | 12 | 12 |
| Twisting method | Single twist | Single twist | Single twist | Single twist |
| Cord diameter (mm) | 0.35 | 0.35 | 0.35 | 0.53 |

**[Table 3]**

| | parts by mass |
|---|---|
| Resorcinol | 1.35 |
| Formalin (solid content concentration: 37%) | 1 |
| Vinyl pyridine latex (solid content concentration: 40%) | 130 |
| Water | 50 |

One kind of tooth fabric was used for the helical toothed belt of Examples 1 to 12 and Comparative Examples 1 to 6. For the tooth fabric, a woven fabric of twill weave was used. The warp yarn of the woven fabric was disposed to extend in the belt width direction and the weft yarn thereof was disposed to extend in the belt longitudinal direction. As the weft yarn of the woven fabric, a multifilament yarn of 66 nylon having a fineness of 155 dtex and a multifilament yarn of spandex (polyurethane elastic fiber) having a fineness of 122 dtex were used. As the warp yarn of the woven fabric, a multifilament yarn of 66 nylon having a fineness of 155 dtex was used. Here, dtex (decitex) is the mass of 10,000 meters of the yarn in grams.

Three types of back fabrics were used for the helical toothed belts of Examples 1 to 12 and Comparative Examples 1 to 6. For the back fabrics B1 and B2, knitted fabrics of circular knitting were used. As the knitting yarns of the back fabrics B1 and B2, a polyester black spun-dyed yarn having a fineness of 84 dtex ("E300S" manufactured by Teijin) and a polyester black spun-dyed yarn having a fineness of 28 dtex ("Mega III" manufactured by Unitika Fibers Co., Ltd.) were used. The back fabric B1 was prepared in which the number of twist per 10 cm was 15.3 times, the number of stitches per 30 mm was 30 and the stitch density per 30 mm was 42 steps. The back fabric B2 was prepared in which the number of twists per 10 cm was 15.3 times, the number of stitches per 30 mm was 40 and the stitch density per 30 mm was 52 steps. A woven fabric of twill weave was used for the back fabric B 3. The warp yarn of the woven fabric was disposed to extend in the belt width direction, and the weft yarn thereof was disposed to extend in the belt longitudinal direction. As the weft yarn of the back fabric B 3, a woolly processed yarn of multifilament yarn of 6 nylon having a fineness of 235 dtex was used. As the warp yarn of the back fabric B3, multifilament yarn of 6 nylon with a fineness of 155 dtex was used.

The woven fabrics used as the tooth fabric and the back fabric B3 was dipped in the RFL liquid shown in Table 3 and then heated and dried to perform an adhesive treatment to form an adhesive layer uniformly on the surface.

Unvulcanized rubber sheets respectively having compositions C1 to C3 shown in Table 4 below were prepared as unvulcanized rubber sheets to form the belt main body of the helical toothed belt of Examples 1 to 12 and Comparative Examples 1 to 6.

**[Table 4]**

| | C1 | C2 | C3 |
|---|---|---|---|
| | parts by mass | parts by mass | parts by mass |
| EPDM *1 | 100 | - | - |
| Chloroprene rubber *2 | - | 100 | - |
| H-NBR *3 | - | - | 100 |
| Adipic acid plasticizer | 0.5 | 8.75 | - |
| Magnesium oxide | - | 4 | - |
| Oil | 8 | - | - |
| Stearic acid | - | - | 1 |
| Anti-aging agent *4 | 2 | 16.75 | - |
| Vulcanization accelerator *5 | 3.4 | 1.5 | 0.5 |
| Carbon black *6 | 50 | 45 | 50 |
| Inorganic filler | 5 | 35 | - |
| Zinc oxide *7 | 5 | 5 | 5 |
| Sulfur | 1 | 0.5 | 1.5 |
| Total | 174.9 | 216.5 | 158 |

| | | | |
|---|---|---|---|
| * 1 "EPT" manufactured by Mitsui Chemicals, Inc. * 2 "PM-40" made by Denka * 3 "Zetpole 2021" manufactured by Zeon Corporation * 4 "Nocrack MB" manufactured by Ouchi Shinko Chemical Industrial Co., Ltd. * 5 "N-cyclohexyl-2 benzothiazole sulfenamide" manufactured by Ouchi Shinko Chemical Industrial Co., Ltd. * 6 "Seast 3" manufactured by Tokai Carbon Co., Ltd. * 7 "Zinc oxide third grade" made by Seido Chemical Industry Co., Ltd. | | | |

The helical toothed belts of Examples 1 to 12 and Comparative Examples 1 to 6 were prepared by using the twisted cords (tension member) A1 to A4, the tooth fabric, the back fabrics B1 to B3, and the unvulcanized rubber sheets of the compositions C1 to C3, in accordance with the procedure described in the embodiment. Vulcanization was performed at 161°C for 25 minutes. The structures of the helical toothed belts of Examples 1 to 12 are shown in the following Table 5, and the structures of the helical toothed belts of Comparative Examples 1 to 6 are shown in the following Table 6. The belt widths of the helical toothed belts of Examples 1 to 12 and Comparative Examples 1 to 6 were all 25 mm and the inclination angles of the tooth portions with respect to the belt width direction were all 5°.

**[Table 5]**

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Tension member | A1 | | | A2 | A4 | A1 | | | | | | |
| Back fabric | B1 | B2 | B3 | B1 | | | | | | | | |
| Rubber composition | C1 | | | | | C3 | C2 | C1 | | | | |
| Perimeter (mm) | 340 | | | | | | | | | | 342 | 340 |
| Tooth pitch (mm) | 2 | | | | | | | | | | 3 | 5 |
| Number of teeth | 170 | | | | | | | | | | 114 | 68 |
| Tooth height (mm) | 0.88 | | | | | | | | | | 1.14 | 1.91 |
| Back portion thickness (mm) | 0.85 | | | | | | | 1.1 | 1.3 | 0.6 | 1.0 | 1.5 |
| Total thickness (mm) | 1.73 | | | | | | | 1.98 | 2.18 | 1.48 | 2.14 | 3.41 |
| Sound pressure (dBA) | 74 | 75 | 74 | 75 | 77 | 76 | 75 | 76 | 75 | 78 | 78 | 80 |
| Evaluation of cold resistance test | S | S | S | S | S | A | B | A | A | S | S | A |

**[Table 6]**

| | Comparative Example | | | | | |
|---|---|---|---|---|---|---|
| | 1 | 2 | 3 | 4 | 5 | 6 |
| Tension member | A3 | | A1 | | | |
| Back fabric | B1 | none | | | B1 | |
| Rubber composition | C1 | | | | | |
| Perimeter (mm) | 340 | | | | | |
| Tooth pitch (mm) | 2 | | | | | |
| Number of teeth | 170 | | | | | |
| Tooth height (mm) | 0.88 | | | | | |
| Back portion thickness (mm) | 0.85 | | | 1.1 | 1.5 | 1.7 |
| Total thickness (mm) | 1.73 | | | 1.98 | 2.38 | 2.58 |
| Sound pressure (dBA) | 85 | 95 | 89 | 86 | 77 | 75 |
| Evaluation of cold resistance test | S | S | S | A | B | B |

### (Sound pressure measurement test)

The sound pressure measurement test was performed on the helical toothed belts of Examples 1 to 12 and Comparative Examples 1 to 6 to evaluate the noise during running of the belt. A two-axis running tester was used for the test. Like the deceleration device 20 illustrated in FIG. 2, the two-axis running tester included a driving pulley and a driven pulley having a diameter larger than that of the driving pulley. A pulley with a number of teeth of 41 was used for the driving pulley and a pulley with a number of teeth of 117 was used for the driven pulley. The helical toothed belt was wound around the two pulleys, the distance between the shafts of the pulleys was adjusted so that the belt tension was 100 N, and the driving pulley was rotated at a rotation speed of 2,000 rpm to run the belt. The load of the driven pulley was set to no load. The ambient temperature was 23°C. Then, the sound pressure (noise level) was measured by the sound collecting microphone M of the sound level meter. Just in order to explain the position of the sound collecting microphone M, the sound collecting microphone M is displayed with the deceleration device 20 illustrated in FIG. 2. The sound collecting microphone M was disposed at a position 100 mm away from the intermediate position of the tension side portion of the helical toothed belt. The measurement results measured by the sound collecting microphone M are shown in Tables 5 and 6. The cases where the sound pressure was 80 dBA or less were evaluated as acceptable as a noise level causing no problem in the practical use of the belt.

### (Cold Endurance Running Test)

When the rigidity of the back portion is increased, the bendability of the belt decreases and bending fatigue on the pulley increases. Therefore, cracks (cleavages) are likely to occur on the back surface (outer peripheral surface). Particularly, in the low-temperature environment, back surface cracks are more likely to remarkably occur. Therefore, with respect to the helical toothed belts of Examples 1 to 12 and Comparative Examples 1 to 6, a cold endurance running test was performed to observe the occurrence of cracks on the back surface (outer peripheral surface). For the cold endurance running test, a two-axis running test having a driving pulley and a driven pulley of the same diameter as the driving pulley was used. Pulleys with the number of teeth of 41 were used as the driving pulley and the driven pulley. The ambient temperature was set to -40°C. The helical toothed belt was wound on the two pulleys and the distance between the shafts of the pulleys was adjusted such that the belt tension was 130 N. Then, a cycle of rotating the driving pulley forward for 3 seconds, rotating reversely for 3 seconds, and then stopping for 10 minutes was repeated 500 cycles. The rotational speed of the driving pulley during forwarding rotation and reverse rotation was 2,000 rpm. The load of the driven pulley was set to no load. After performing 500 cycles, a state of the back surface (outer peripheral surface) of the helical toothed belt was visually checked. The presence or absence of cracks on the back surface and the degree of cracking were evaluated in the following three stages.
S: No crack
A: Although cracks occurred, it was a level of causing no problem in practical use
B: There are cracks in the entire back surface to cause a problem in practical use

Comparative Example 1 is an example in which although the back fabric B1 was used, the tension member A3 of the E glass fiber which is not a high-strength glass fiber was used, and the sound pressure exceeded the determination criterion as 85 dBA.

Comparative Example 2 is an example using the tension member A3 of E glass fiber which is not a high-strength glass fiber without providing a back fabric, and the sound pressure was the largest among Comparative Examples as 95 dBA.

Comparative Example 3 is an example using the tension member A1 of K glass fiber, which is a high-strength glass fiber, without providing a back fabric, and although the sound pressure was smaller than that of Comparative Example 2, it was still larger than the determination criterion (80 dBA).

Comparative Example 4 is an example with the same configuration as in Comparative Example 3 except that the thickness of the back portion was larger than that of Comparative Example 3. In Comparative Example 4, although the sound pressure was slightly smaller than that in Comparative Example 3, it was still larger than the determination criterion (80 dBA). In addition, in Comparative Example 4, the bendability was lower than that in Comparative Example 3, and in the cold endurance running test, cracks occurred to an extent that there was no problem in practical use of the belt. From the results of Comparative Examples 3 and 4, it was found that even if the thickness of the back portion increased, the effect of reducing the noise was small without the back fabric.

In each of Examples 1 to 12, the sound pressure was 80 dBA or less, which is the determination criterion.

Examples 2 and 3 was different from Example 1 only in the kind of the back fabric, Examples 4 and 5 was different from Example 1 only in the kind of fibers constituting the tension member, and Examples 6 and 7 are different from Example 1 only in the rubber component. In Examples 1 to 7, there was no significant difference in sound pressure. In Examples 1 to 5 with the rubber component being EPDM (C1), cracks did not occur in the cold endurance running test. In Example 6 with the rubber component being H-NBR (C3) and in Example 7 with the rubber component being CR (C2), the bendability was reduced as compared to the case of EPDM, and cracks occurred in the cold endurance running test. Particularly in Example 7, cracks causing problems in practical use occurred.

Examples 8 and 9 are examples with the same configuration as in Example 1 except that the thickness of the back portion was made larger than that in Example 1. Example 10 is an example with the same configuration as in Example 1 except that the thickness of the back portion was made smaller than that in Example 1. In each of Examples 8 and 9, the sound pressure was the determination criterion (80 dBA) or less. In Examples 8 and 9, bendability was reduced by an increase in the thickness of the back portion and thus, cracks were slightly generated in the cold endurance running test, but it was a level of causing no problem in practical use. From the results of Examples 8 to 10, it was confirmed that in the case where the tooth pitch is 2 mm, the noise can be suppressed without impairing bendability in the range of the thickness of the back portion of 0.60 to 1.3 mm.

Comparative Examples 5 and 6 are examples with the same configuration as in Example 1 except that the thickness of the back portion was made larger than those of Examples 8 and 9. In Comparative Examples 5 and 6 in which the thickness of the back portion was 1.5 mm or more, although the sound pressure was lowered, cracks occurred to the degree of practically problematic in the cold endurance running test. Accordingly, bendability was impaired.

Examples 11 and 12 are examples in which the tooth pitch was larger than that in Example 1. From the results of Examples 1, 11, and 12, there was a tendency that the sound pressure increased as the tooth pitch (tooth size) increased. However, since both case were below the determination criterion (80 dBA), it was confirmed that the noise suppression effect was obtained with respect to the helical toothed belt with a tooth pitch of 2 to 5 mm.

### REFERENCE SIGNS LIST

- 1: Electric power steering apparatus
- 15: Electric motor (driving source)
- 20: Deceleration device (belt power transmission device)
- 21: Driving pulley
- 22: Driven pulley
- 30: Helical toothed belt
- 31: Back portion
- 32: Tooth portion
- 33: Tension member
- 34: Belt main body
- 35: Tooth fabric
- 36: Back fabric

## Claims

1. A helical toothed belt (30) comprising:
a back portion (31) in which a tension member (33) is buried and;
a plurality of tooth portions (32) which are arranged at a predetermined interval along a belt longitudinal direction on one surface of the back portion (31) and each have inclination with respect to a belt width direction,
wherein a surface of the tooth portion (32) and a portion of the one surface of the back portion (31) are formed of a tooth fabric (35),
wherein the other surface of the back portion (31) is formed of a back fabric (36),
wherein the plurality of tooth portions (32) have a tooth pitch (P) in the range from 2 to 5 [mm],
in a case where the tooth pitch of the plurality of tooth portions is 2 mm or more and less than 3 mm, the back portion has a thickness in the range from 0.6 to 1.3 [mm],
in a case where the tooth pitch of the plurality of tooth portions is 3 mm or more and less than 4 mm, the thickness of the back portion is in the range from 0.6 to 1.5 [mm],
in a case where the tooth pitch of the plurality of tooth portions is 4 mm or more and 5 mm or less, the thickness (tb) of the back portion (31) is 1.2 mm or more and 2.0 mm or less, and
wherein the tension member (33) is a twisted cord, **characterized in that** the tension member (33) comprises a high-strength glass fiber or a carbon fiber and having a diameter in the range from 0.2 to 0.6 [mm];
wherein the tooth fabric (35) is formed of a woven fabric comprising warp yarns and weft yarns; the woven fabric having an adhesive layer formed by an adhesive treatment on its surface;
wherein the back fabric (36) is formed of a knitted fabric knitted with knitting yarns; the knitted fabric having no adhesive layer by an adhesive treatment on its surface;
wherein a rubber composition constituting a belt main body is impregnated to the knitted fabric.

2. The helical toothed belt (30) according to Claim 1,
wherein in the case where the tooth pitch (P) of the plurality of tooth portions (32) is 2 mm or more and less than 3 mm, the tooth portion (32) has a tooth height in the range from 0.7 to 2.0 [mm],
in the case where the tooth pitch (P) of the plurality of tooth portions (32) is 3 mm or more and less than 4 mm, the tooth height of the tooth portion (32) is in the range of 1.0 to 2.3 [mm], and
in the case where the tooth pitch (P) of the plurality of tooth portions (32) is in the range from 4 to 5 [mm], the tooth height of the tooth portion (32) is in the range from 1.5 to 2.3 [mm].

3. The helical toothed belt (30) according to Claim 1 or 2,
wherein the back portion (31) comprises a rubber component, and
the rubber component comprises an ethylene-propylene-diene terpolymer or a hydrogenated nitrile rubber.

4. The helical toothed belt (30) according to any one of Claims 1 to 3,
the warp yarns or the weft yarns are disposed so as to extend in the belt longitudinal direction, and
said warp yarns or weft yarns disposed so as to extend in the belt longitudinal direction comprise an elastic yarn having stretchability.

5. The helical toothed belt (30) according to any one of Claims 1 to 4,
wherein fibers constituting the tooth fabric (35) comprise at least one kind of fibers selected from the group consisting of nylon, aramid, polyester, polybenzoxazole, and cotton.

6. The helical toothed belt (30) according to any one of Claims 1 to 5,
wherein fibers constituting the back fabric (36) comprise at least one kind of fibers selected from the group consisting of nylon, aramid and polyester.

7. A belt power transmission device comprising:
a driving pulley that is rotatably driven by a driving source,
a driven pulley, and
the helical toothed belt (30) described in any one of Claims 1 to 6, which is wound around the driving pulley and the driven pulley.

8. The belt power transmission device according to Claim 7,
wherein a rotational speed of the driving pulley is in the range from 1000 to 4000 [rpm].

9. The belt power transmission device according to Claim 7 or 8,
wherein a load of the driven pulley is in the range from 0.5 to 3 [kW].

10. The belt power transmission device according to any one of Claims 7 to 9,
wherein the driven pulley has an outer diameter larger than an outer diameter of the driving pulley, and
the belt power transmission device is a deceleration device of an electric power steering apparatus for a vehicle.

## Patentansprüche

1. Spiralförmiger verzahnter Riemen (30), umfassend:
einen hinteren Abschnitt (31), in dem ein Spannungselement (33) verlegt ist; und
eine Vielzahl von Zahnabschnitten (32), die in einem vorbestimmten Abstand entlang einer Längsrichtung des Riemens auf einer Oberfläche des hinteren Abschnitts (31) angeordnet sind und in Bezug auf eine Breitenrichtung des Riemens jeweils eine Neigung aufweisen,
wobei eine Oberfläche des Zahnabschnitts (32) und ein Abschnitt der einen Oberfläche des hinteren Abschnitts (31) aus einem Zahngewebe (35) ausgebildet sind,
wobei die andere Oberfläche des hinteren Abschnitts (31) aus einem hinteren Gewebe (36) ausgebildet ist,
wobei die Vielzahl von Zahnabschnitten (32) eine Zahnteilung (P) in dem Bereich von 2 bis 5 [mm] aufweisen,
in einem Fall, bei dem die Zahnteilung der Vielzahl von Zahnabschnitten 2 mm oder mehr und weniger als 3 mm beträgt, der hintere Abschnitt eine Dicke in dem Bereich von 0,6 bis 1,3 [mm] aufweist,
in einem Fall, bei dem die Zahnteilung der Vielzahl von Zahnabschnitten 3 mm oder mehr und weniger als 4 mm beträgt, die Dicke des hinteren Abschnitts in dem Bereich von 0,6 bis 1,5 [mm] liegt,
in einem Fall, bei dem die Zahnteilung der Vielzahl von Zahnabschnitten 4 mm oder mehr und 5 mm oder weniger beträgt, die Dicke (tb) des hinteren Abschnitts (31) 1,2 mm oder mehr und 2,0 oder weniger beträgt, und
wobei das Spannungselement (33) eine verdrillte Kordel ist, **dadurch gekennzeichnet, dass** das Spannungselement (33) eine hochfeste Glasfaser oder eine Kohlefaser umfasst und einen Durchmesser in dem Bereich von 0,2 bis 0,6 [mm] aufweist;
wobei das Zahngewebe (35) aus einem gewobenen Gewebe ausgebildet ist, das Kettgarne und Schussgarne umfasst; wobei das gewobene Gewebe eine Haftschicht aufweist, die durch eine Haftbehandlung auf seiner Oberfläche ausgebildet ist;
wobei das hintere Gewebe (36) aus einem Gestrick ausgebildet ist, das mit Strickgarnen gestrickt ist; wobei das Gestrick keine Haftschicht durch eine Haftbehandlung auf seiner Oberfläche aufweist;
wobei eine Kautschukzusammensetzung, die einen Riemenhauptkörper bildet, auf das Gestrick imprägniert ist.

2. Spiralförmiger verzahnter Riemen (30) nach Anspruch 1,
wobei in dem Fall, bei dem die Zahnteilung (P) der Vielzahl von Zahnabschnitten (32) 2 mm oder mehr und weniger als 3 mm beträgt, der Zahnabschnitt (32) eine Zahnhöhe in dem Bereich von 0,7 bis 2,0 [mm] aufweist,
in dem Fall, bei dem die Zahnteilung (P) der Vielzahl von Zahnabschnitten (32) 3 mm oder mehr und weniger als 4 mm beträgt, die Zahnhöhe des Zahnabschnitts (32) in dem Bereich von 1,0 bis 2,3 [mm] liegt, und
in dem Fall, bei dem die Zahnteilung (P) der Vielzahl von Zahnabschnitten (32) in dem Bereich von 4 bis 5 [mm] liegt, die Zahnhöhe des Zahnabschnitts (32) in dem Bereich von 1,5 bis 2,3 [mm] liegt.

3. Spiralförmiger verzahnter Riemen (30) nach Anspruch 1 oder 2,
wobei der hintere Abschnitt (31) eine Kautschukkomponente umfasst, und
die Kautschukkomponente ein Ethylen-Propylen-Dien-Terpolymer oder einen hydrierten Nitrilkautschuk umfasst.

4. Spiralförmiger verzahnter Riemen (30) nach einem der Ansprüche 1 bis 3,
die Kettgarne oder die Schussgarne so angeordnet sind, dass sie sich in der Längsrichtung des Riemens erstrecken, und
die Kettgarne oder Schussgarne, die angeordnet sind, um sich in der Längsrichtung des Riemens zu erstecken, ein elastisches Garn umfassen, das Dehnbarkeit aufweist.

5. Spiralförmiger verzahnter Riemen (30) nach einem der Ansprüche 1 bis 4,
wobei Fasern, die das Zahngewebe (35) bilden, mindestens eine Art von Fasern umfassen, ausgewählt aus der Gruppe, bestehend aus Nylon, Aramid, Polyester, Polybenzoxazol und Baumwolle.

6. Spiralförmiger verzahnter Riemen (30) nach einem der Ansprüche 1 bis 5,
wobei Fasern, die den hinteren Abschnitt (36) bilden, mindestens eine Art von Fasern umfassen, ausgewählt aus der Gruppe, bestehend aus Nylon, Aramid und Polyester.

7. Riemenkraftübertragungsvorrichtung, umfassend:
eine Antriebsriemenscheibe, die von einer Antriebsquelle drehend angetrieben wird,
eine angetriebene Riemenscheibe, und
einen in einem der Ansprüche 1 bis 6 beschriebenen spiralförmigen verzahnten Riemen (30), der um die Antriebsriemenscheibe und die angetriebene Riemenscheibe gewickelt ist.

8. Riemenkraftübertragungsvorrichtung nach Anspruch 7,
wobei eine Drehzahl der Antriebsriemenscheibe in dem Bereich von 1000 bis 4000 [U/min] liegt.

9. Riemenkraftübertragungsvorrichtung nach Anspruch 7 oder 8,
wobei eine Last der angetriebenen Riemenscheibe in dem Bereich von 0,5 bis 3 [kW] liegt.

10. Riemenkraftübertragungsvorrichtung nach einem der Ansprüche 7 bis 9,
wobei die angetriebene Riemenscheibe einen Außendurchmesser aufweist, der größer ist als ein Außendurchmesser der Antriebsriemenscheibe, und
die Riemenkraftübertragungsvorrichtung eine Bremsvorrichtung einer elektrischen Servolenkungsvorrichtung für ein Fahrzeug ist.

## Revendications

1. Courroie dentée hélicoïdale (30) comprenant :
une partie arrière (31) dans laquelle un élément tendeur (33) est enfoui et ;
une pluralité de parties de dent (32) qui sont agencées à un intervalle prédéterminé le long d'une direction longitudinale de courroie sur une première surface de la partie arrière (31) et ont chacune une inclinaison par rapport à une direction de largeur de courroie,
dans laquelle une surface de la partie de dent (32) et une partie de la première surface de la partie arrière (31) sont formées d'un tissu denté (35),
dans laquelle l'autre surface de la partie arrière (31) est formée d'un tissu arrière (36),
dans laquelle la pluralité de parties de dent (32) ont un pas de dent (P) dans la plage de 2 à 5 [mm],
dans un cas où le pas de dent de la pluralité de parties de dent est de 2 mm ou plus et de moins de 3 mm, la partie arrière a une épaisseur dans la plage de 0,6 à 1,3 [mm],
dans un cas où le pas de dent de la pluralité de parties de dent est de 3 mm ou plus et de moins de 4 mm, l'épaisseur de la partie arrière est dans la plage de 0,6 à 1,5 [mm],
dans un cas où le pas de dent de la pluralité de parties de dent est de 4 mm ou plus et de 5 mm ou moins, l'épaisseur (tb) de la partie arrière (31) est de 1,2 mm ou plus et de 2,0 mm ou moins, et
dans laquelle l'élément tendeur (33) est un cordon torsadé, **caractérisée en ce que** l'élément tendeur (33) comprend une fibre de verre à haute résistance ou une fibre de carbone et ayant un diamètre dans la plage de 0,2 à 0,6 [mm] ;
dans laquelle le tissu denté (35) est formé d'un tissu tissé comprenant des fils de chaîne et des fils de trame ; le tissu tissé ayant une couche adhésive formée par un traitement adhésif sur sa surface ;
dans laquelle le tissu arrière (36) est formé d'un tissu tricoté qui est tricoté avec des fils à tricoter ; le tissu tricoté n'ayant aucune couche adhésive par un traitement adhésif sur sa surface ;
dans laquelle une composition de caoutchouc constituant un corps principal de courroie est imprégnée sur le tissu tricoté.

2. Courroie dentée hélicoïdale (30) selon la revendication 1,
dans laquelle dans le cas où le pas de dent (P) de la pluralité de parties de dent (32) est de 2 mm ou plus et de moins de 3 mm, la partie de dent (32) a une hauteur de dent dans la plage de 0,7 à 2,0 [mm],
dans le cas où le pas de dent (P) de la pluralité de parties de dent (32) est de 3 mm ou plus et de moins de 4 mm, la hauteur de dent de la partie de dent (32) est dans la plage de 1,0 à 2,3 [mm], et
dans le cas où le pas de dent (P) de la pluralité de parties de dent (32) est dans la plage de 4 à 5 [mm], la hauteur de dent de la partie de dent (32) est dans la plage de 1,5 à 2,3 [mm].

3. Courroie dentée hélicoïdale (30) selon la revendication 1 ou 2,
dans laquelle la partie arrière (31) comprend un composant de caoutchouc, et
le composant de caoutchouc comprend un terpolymère d'éthylène-propylène-diène ou un caoutchouc nitrile hydrogéné.

4. Courroie dentée hélicoïdale (30) selon l'une quelconque des revendications 1 à 3,
les fils de chaîne ou les fils de trame sont disposés de façon à s'étendre dans la direction longitudinale de courroie, et
lesdits fils de chaîne ou fils de trame disposés de façon à s'étendre dans la direction longitudinale de courroie comprennent un fil élastique ayant une extensibilité.

5. Courroie dentée hélicoïdale (30) selon l'une quelconque des revendications 1 à 4,
dans laquelle des fibres constituant le tissu denté (35) comprennent au moins un type de fibres choisi dans le groupe constitué du nylon, de l'aramide, du polyester, du polybenzoxazole et du coton.

6. Courroie dentée hélicoïdale (30) selon l'une quelconque des revendications 1 à 5,
dans laquelle des fibres constituant le tissu arrière (36) comprennent au moins un type de fibres choisi dans le groupe constitué du nylon, de l'aramide et du polyester.

7. Dispositif de transmission de puissance à courroie comprenant :
une poulie d'entraînement qui est entraînée en rotation par une source d'entraînement,
une poulie entraînée, et
la courroie dentée hélicoïdale (30) selon l'une quelconque des revendications 1 à 6, qui est enroulée autour de la poulie d'entraînement et de la poulie entraînée.

8. Dispositif de transmission de puissance à courroie selon la revendication 7,
dans lequel une vitesse de rotation de la poulie d'entraînement est dans la plage de 1000 à 4 000 [tr/min].

9. Dispositif de transmission de puissance à courroie selon la revendication 7 ou 8, dans lequel une charge de la poulie entraînée est dans la plage de 0,5 à 3 [kW].

10. Dispositif de transmission de puissance à courroie selon l'une quelconque des revendications 7 à 9,
dans lequel la poulie entraînée a un diamètre externe plus grand qu'un diamètre externe de la poulie d'entraînement, et
le dispositif de transmission de puissance à courroie est un dispositif de décélération d'un appareil de direction assistée électrique pour un véhicule.
